# FASCICULE DE BREVET EUROPEEN

(11) **EP 3 238 382 B1**
(45) Date de publication et mention de la délivrance du brevet: **05.09.2018**
(21) Numéro de dépôt: 15823698.4
(22) Date de dépôt: 21.12.2015
(51) Int. Cl.: H04L 12/28, H04L 29/08, H04L 12/24

(54) **GESTION D'ENTITÉS ÉLECTRONIQUES POUR LA CRÉATION D'UN FIL D'ACTUALITÉS**
VERWALTUNG ELEKTRONISCHER EINHEITEN ZUR ERZEUGUNG EINER NACHRICHTENEINSPEISUNG
MANAGEMENT OF ELECTRONIC ENTITIES FOR THE CREATION OF A NEWSFEED

(30) Priorité: 24.12.2014 FR 1463340
(43) Date de publication de la demande: 01.11.2017
(73) Titulaire: Orange, 75015 Paris (FR)
(72) Inventeur: SUZANNE, Benoît, 92410 Ville d'Avray (FR); GALLOYER, Jérôme, 93450 L'ile Saint Denis (FR)
(74) Mandataire: Cabinet Plasseraud
(86) Numéro de dépôt international: PCT/FR2015/053671
(87) Numéro de publication internationale: WO 2016/102860

(56) Documents cités:
- WO-A2-2013/186519
- US-A1- 2013 097 238

## Description

La présente invention concerne le domaine de la gestion d'une pluralité d'entités électroniques, et en particulier la gestion d'entités ou objets connectés.

L'invention s'applique avantageusement à un réseau d'objets connectés, appartenant par exemple à un utilisateur ou une entreprise.

On entend par objet connecté tout objet apte à mettre en oeuvre des actions données et présentant en outre une interface de communication pour partager des informations sur un réseau. Aucune restriction n'est attachée à l'interface de communication considérée. Par la suite, l'exemple d'objets connectés à un réseau sans-fil par une interface de type Wi-fi est considéré, à titre purement illustratif.

Les objets connectés peuvent remonter des informations, ou données d'événement, à une interface réseau à laquelle accèdent les objets connectés. Ces informations sont ensuite transmises à un serveur distant ou local, afin que l'utilisateur puisse les consulter.

Les données d'événement remontées par un ensemble d'objets connectés d'un utilisateur peuvent être agrégées dans un serveur distant ou local. L'utilisateur peut ainsi, par l'intermédiaire d'un terminal tel qu'un Smartphone, une tablette tactile ou un ordinateur par exemple (ou tout terminal permettant l'accès au réseau local ou distant), accéder aux données d'événement.

Le document d'art antérieure US2013/0097238 divulgue des objets de réseau social qui ne sont affichés que sur une plate-forme particulière s'il existe une application optimisée pour ladite plate-forme. A cet effet, les données d'événement peuvent être publiées sur un fil d'actualités présentant, par exemple de manière chronologique, les données d'événement ainsi que pour chaque donnée d'événement, l'objet connecté ayant remonté cette donnée.

Toutefois, un tel fil d'actualités regroupe des données d'événement issues de l'ensemble des objets connectés d'un utilisateur donné.

Il n'existe cependant aucune solution permettant de différencier les fils d'actualités selon des types d'objets connectés remontant des données d'événement de natures différentes (relatives à la cuisine, à la météorologie, à la gestion de l'énergie par exemple), ou issues d'objets connectés localisés dans un endroit commun, ou d'un même fabricant. Il en résulte une perte de temps et de confort pour l'utilisateur souhaitant accéder à des données d'événement issues de certains objets connectés uniquement.

Il existe ainsi un besoin de proposer une solution permettant l'agrégation de données d'événement d'objets connectés appartenant à un type donné.

La présente invention vient améliorer la situation.

A cet effet, un premier aspect de l'invention concerne un procédé un procédé de gestion d'une pluralité d'entités électroniques, chaque entité électronique enregistrée auprès d'un serveur de gestion principal étant :
- associée à un type donné et à un identifiant d'utilisateur dans le serveur de gestion principal, et
- apte à transmettre des données d'événement au serveur de gestion principal.

Le procédé comprend les étapes suivantes :
- transmission, par un serveur de gestion secondaire au serveur de gestion principal, d'une requête indiquant une information relative à un premier type d'entité électronique et comprenant un premier identifiant d'utilisateur ;
- détermination par le serveur de gestion principal d'un premier ensemble d'entités électroniques comprenant les entités électroniques associées au premier type identifié dans la requête et associés au premier identifiant d'utilisateur;
- transmission, par le serveur de gestion principal, des données d'événement issues des entités électroniques du premier ensemble, au serveur de gestion secondaire ;
- publication, par le serveur de gestion secondaire, des données d'événement issues des entités électroniques du premier ensemble sur un fil d'actualités d'un utilisateur associé au premier identifiant d'utilisateur.

On entend par «type d'entité électronique » toute catégorie dans laquelle une entité électronique (un objet connecté) peut être classée. Aucune restriction n'est attachée aux critères utilisés pour la classification : usage de l'objet connecté, localisation, fabricant, ancienneté, etc.

Ainsi, un serveur de gestion principal peut centraliser l'ensemble des entités électroniques d'un ou de plusieurs utilisateurs, et peut afficher un fil d'actualités « global » regroupant les données d'événement issues de l'ensemble des entités électroniques. Comme expliqué précédemment, un tel fil d'actualités n'est aucunement spécifique d'un type d'entité électronique, et requiert un tri de l'utilisateur pour accéder à des données d'événement pertinentes. Le procédé selon l'invention permet alors de grouper les entités électroniques par types, afin de pouvoir adresser à des serveurs de gestion secondaires, des données d'événement qui concernent un type donné. Le serveur de gestion secondaire, qui peut appartenir à un fabricant d'entités électroniques d'un seul type donné, peut ainsi générer un fil d'actualités spécifique à ce type, ce qui est avantageux pour l'utilisateur.

Selon un mode de réalisation de l'invention, le procédé peut comprendre en outre une étape d'enregistrement d'une première entité électronique auprès du serveur de gestion secondaire, la première entité électronique étant associée au premier type et au premier identifiant d'utilisateur, et la première entité électronique étant apte à transmettre des données d'événement au serveur de gestion secondaire.

En particulier, le serveur de gestion secondaire peut être dédié à des premières entités électroniques (par exemple, le serveur de gestion secondaire est un service du fabricant des premières entités électroniques). Le serveur de gestion secondaire intègre ainsi les fonctionnalités d'enregistrement du serveur de gestion principal.

Selon un mode de réalisation de l'invention, le procédé peut comprendre une étape préalable d'installation d'une application sur un terminal d'un utilisateur associé au premier identifiant d'utilisateur, l'application permettant l'accès au serveur de gestion secondaire, la requête étant transmise par le serveur de gestion secondaire sur réception d'une requête utilisateur issue de l'application installée sur le terminal utilisateur.

Ainsi, le fil d'actualités peut être créé sur requête de l'utilisateur, ce qui évite des échanges inutiles dans le réseau reliant les serveurs de gestion. En outre, une application dédiée au serveur de gestion secondaire permet de simplifier l'accès de l'utilisateur au serveur de gestion secondaire.

En variante, la requête peut être transmise par le serveur de gestion secondaire suite à l'étape d'enregistrement de la première entité électronique auprès du serveur de gestion secondaire.

L'élément déclencheur de la transmission de la requête de l'étape peut ainsi être l'enregistrement d'une première entité électronique de l'utilisateur auprès du serveur de gestion secondaire (et non plus l'envoi d'une requête par l'utilisateur via l'application installée sur le terminal). Les données d'événements issues des entités du premier ensemble peuvent ainsi être stockées au niveau du serveur de gestion secondaire, qui peut ainsi les retourner à l'application de l'utilisateur, sur requête de l'utilisateur ou de manière spontanée.

En complément, les données d'événement issues de la première entité électronique peuvent être publiées sur le fil d'actualités de l'utilisateur avec les données d'événement issues des entités électroniques du premier ensemble.

Ainsi, le serveur de gestion secondaire peut concaténer les données d'événement issues des entités électroniques enregistrées auprès du serveur de gestion principale, et celles issues des premières entités électroniques, ce qui permet d'enrichir le fil d'actualités, tout en affichant uniquement des données d'événement relatives à un premier type.

En complément ou en variante, le procédé peut comprendre en outre les étapes suivantes :
- transmission par le serveur de gestion secondaire au serveur de gestion principal des données d'événement issues de la première entité électronique ;
- publication par le serveur de gestion principal des données d'événement sur un fil d'actualités global de l'utilisateur associé au premier identifiant d'utilisateur.

Le serveur de gestion principal peut ainsi maintenir un fil d'actualités global qui affiche des données d'événement issues de nombreuses entités électroniques, même de celles qui ne sont pas enregistrées auprès du serveur de gestion principal.

Selon un mode de réalisation de l'invention, l'envoi de la requête au serveur de gestion principal est conditionné par l'enregistrement préalable de la première entité électronique auprès du serveur de gestion secondaire.

Un tel mode de réalisation permet de réserver l'accès au service proposé par le serveur de gestion secondaire, aux utilisateurs ayant au préalable enregistré un objet connecté auprès du serveur de gestion secondaire.

Dans un mode de réalisation, l'information relative au premier type de dispositif peut être un identifiant de la première entité électronique, et l'identifiant de la première entité électronique peut avoir été préalablement enregistré dans le serveur de gestion principal en association avec un identifiant du premier type.

Ainsi, il n'est nullement requis de stocker une table de correspondance entre des identifiants d'entités électroniques et identifiants de types du serveur de gestion.

En variante, l'information relative au premier type de dispositif peut être un identifiant du premier type.

Un deuxième aspect de l'invention concerne un programme informatique comportant des instructions pour la mise en oeuvre du procédé selon le premier aspect de l'invention, lorsque ces instructions sont exécutées par un processeur.

Un troisième aspect de l'invention concerne un serveur de gestion secondaire d'un fil d'actualités d'un utilisateur, le serveur de gestion secondaire comprenant :
- une unité de transmission pour transmettre, à un serveur de gestion principal, d'une requête indiquant une information relative à un premier type d'entité électronique et comprenant un premier identifiant d'utilisateur ;
- une unité de réception pour recevoir, depuis le serveur de gestion principal, de données d'événement issues d'entités électroniques d'un premier ensemble, le premier ensemble comprenant des entités électroniques associées au premier type identifié dans la requête et associés au premier identifiant d'utilisateur ;
- un processeur apte à publier les données d'événement issues des entités électroniques du premier ensemble sur un fil d'actualités d'un utilisateur associé au premier identifiant d'utilisateur.

Un quatrième aspect de l'invention concerne un serveur de gestion principal d'une pluralité d'entités électroniques, comprenant :
- une mémoire stockant en association chaque entité électronique avec un type donné et un identifiant d'utilisateur ;
- une unité de réception apte à :
   - recevoir des données d'événement des entités électroniques;
   - recevoir depuis un serveur de gestion secondaire, une requête indiquant une information relative à un premier type d'entité électronique et comprenant un premier identifiant d'utilisateur ;
- un processeur apte à déterminer un premier ensemble d'entités électroniques comprenant les entités électroniques associées au premier type identifié dans la requête et associés au premier identifiant d'utilisateur ;
- une unité de transmission des données d'événement issues des entités électroniques du premier ensemble, au serveur de gestion secondaire.

Un cinquième aspect de l'invention concerne un système de gestion d'une pluralité d'entités électroniques comprenant un serveur de gestion principal selon le quatrième aspect de l'invention et un serveur de gestion secondaire selon le troisième aspect de l'invention.

D'autres caractéristiques et avantages de l'invention apparaîtront à l'examen de la description détaillée ci-après, et des dessins annexés sur lesquels:
- la figure 1 illustre un système selon un mode de réalisation de l'invention ;
- la figure 2 est un diagramme illustrant les étapes d'un procédé selon un mode de réalisation de l'invention;
- la figure 3 présente un serveur de gestion secondaire selon un mode de réalisation de l'invention ;
- la figure 4 illustre un serveur de gestion principal selon un mode de réalisation de l'invention.

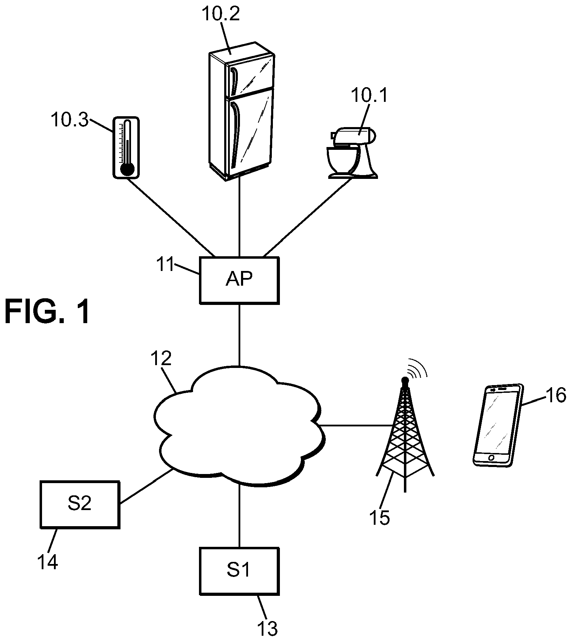

La **figure 1** illustre un système de gestion d'une pluralité d'entités électroniques 10.1, 10.2 et 10.3 selon un mode de réalisation de l'invention. Les entités électroniques gérées sont des objets connectés dans l'exemple qui suit. A titre illustratif, le système peut ainsi comprendre un robot de cuisine 10.1, un réfrigérateur 10.2 et un thermomètre 10.3, appartenant à un même utilisateur.

Les entités 10.1, 10.2 et 10.3 sont des objets connectés et disposent ainsi d'interfaces respectives permettant l'accès à un réseau 12 via un point d'accès 11, pouvant être une borne Wi-fi par exemple. Un unique point d'accès 11 a été représenté. Toutefois, l'invention couvre également les cas dans lesquels les entités 10.1, 10.2 et 10.3 accèdent au réseau 12 via des points d'accès distincts.

Le point d'accès 13 permet aux entités 10.1, 10.2 et 10.3 d'accéder au réseau 12, tel que le réseau internet par exemple, et ainsi d'accéder à des serveurs distants, tels qu'un serveur de gestion principal 13 et un serveur de gestion secondaire 14 selon des modes de réalisation de l'invention. En variante, l'un ou l'autre des serveurs de gestion 13 et 14 (ou les deux) peuvent être intégrés dans un réseau local de l'utilisateur.

Comme détaillé dans ce qui suit, chacune des entités 10.1, 10.2 et 10.3 est apte à remonter au point d'accès 11 des données d'événement. Par exemple, le robot de cuisine 10.1 peut remonter des consignes à l'utilisateur lorsqu'une intervention est requise (ajout d'un ingrédient par exemple) ou peut indiquer une heure à laquelle un plat cuisiné sera prêt. Le réfrigérateur 10.2 peut indiquer l'ensemble des produits qu'il stocke, peut générer une alerte ou peut indiquer sa température de fonctionnement. Le thermomètre 10.3 peut remonter une température mesurée à un instant donné dans la pièce dans laquelle il se trouve.

A partir de ces données d'événement, le serveur de gestion principal 13 peut tenir à jour un fil d'actualités global sur lequel il publie l'ensemble des données d'informations qu'il reçoit. A cet effet, un enregistrement préalable de chacune des entités 10.1, 10.2 et 10.3 peut être requis, comme décrit dans ce qui suit.

Le serveur de gestion secondaire 14 peut être un serveur dédié spécifiquement à l'une ou à certaines des entités 10.1, 10.2 et 10.3. Dans l'exemple qui suit, le serveur de gestion secondaire 14 est un serveur du fabricant du robot de cuisine 10.1. Un tel exemple est donné à titre purement illustratif et ne saurait restreindre l'invention à cette réalisation particulière. Il peut être ainsi prévu que, lorsque l'utilisateur connecte pour la première fois le robot de cuisine 10.1 au point d'accès 11, le robot de cuisine s'enregistre auprès du serveur de gestion secondaire 14, en association avec un premier identifiant propre à l'utilisateur par exemple. En variante, l'utilisateur peut lui-même accéder au serveur de gestion secondaire 14 afin d'enregistrer son robot de cuisine 10.1.

A cet effet, l'utilisateur peut utiliser un terminal 16, tel qu'un Smartphone, une tablette tactile, un ordinateur fixe ou portable, ou tout terminal permettant l'accès au réseau 12. Dans l'exemple illustré sur la figure 1, le terminal 16 est un Smartphone et accède au réseau 12 via un point d'accès réseau mobile 15 (de type NodeB ou eNodeB par exemple). Un tel type d'accès est donné à titre illustratif uniquement. Par exemple, le terminal 16 peut être équipé d'une interface Wi-fi lui permettant d'accéder au réseau 12 via le point d'accès 11, lorsque l'utilisateur est à son domicile par exemple.

Comme détaillé dans ce qui suit, le terminal 16 peut en outre stocker et exécuter des applications permettant de visualiser respectivement des fils d'actualités créés par le serveur de gestion principal 13 et le serveur de gestion secondaire 14.

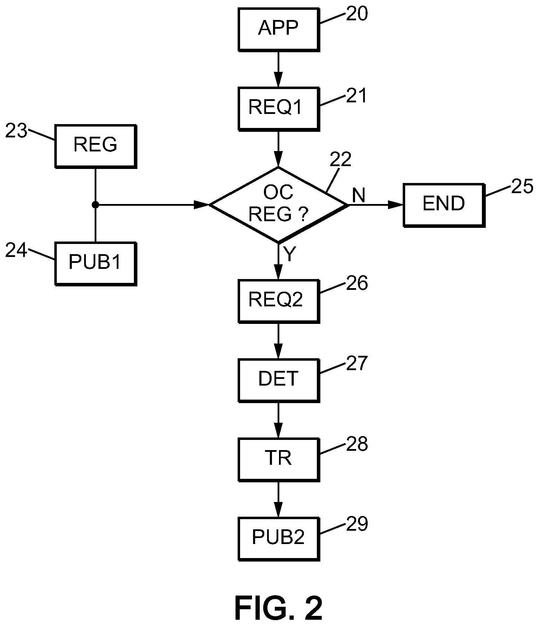

La **figure 2** est un diagramme illustrant les étapes d'un procédé selon un mode de réalisation de l'invention.

A une étape préalable 20, l'utilisateur peut installer une application sur le terminal 16. L'application est associée au serveur de gestion secondaire. On rappelle que le serveur de gestion secondaire est, selon l'exemple considéré, spécialement dédié aux robots de cuisine, tel que le robot de cuisine 10.1 (ou plus largement dédié à l'ensemble des appareils de cuisine d'un industriel du domaine) : l'application propose un ensemble de services à l'utilisateur, en rapport par exemple avec la cuisine.

A une étape 21, l'utilisateur peut requérir auprès du serveur de gestion secondaire 14 la création d'un fil d'actualités comprenant des données d'événement issues des entités électroniques de cet utilisateur, qui sont associées à un premier type. Par exemple, l'utilisateur peut souhaiter recevoir les données événement issues de ses objets connectés associés au type « cuisine » (c'est-à-dire issues du robot de cuisine 10.1 et du réfrigérateur 10.2). A cet effet, une requête utilisateur peut être envoyée depuis l'application installée sur le terminal 16, vers le serveur de gestion secondaire 14. La requête utilisateur peut être envoyée suite à la sélection par l'utilisateur d'un menu de l'application installée sur le terminal 16, le menu proposant de regrouper ses entités électroniques associées au type « cuisine ».

La requête utilisateur peut comprendre un premier identifiant de l'utilisateur ainsi qu'une information relative au premier type de dispositif électronique. L'information relative au premier type de dispositif électronique peut être un identifiant du premier type, par exemple un mot-clé, tel que « cuisine » dans l'exemple considéré. Lorsque le serveur de gestion secondaire 13 est spécifique d'un unique type d'entité électronique (par exemple, spécifique du type « cuisine »), la requête utilisateur peut ne pas comprendre l'information relative au premier type de dispositif électronique.

En outre, aucune restriction n'est attachée à la forme du premier identifiant de l'utilisateur, qui peut être une adresse e-mail, un identifiant de type « login », ou un couple « login »/mot de passe, par exemple. Le premier identifiant de l'utilisateur correspond à l'identifiant d'utilisateur auquel sont associés les entités électroniques 10.2 et 10.3 (et optionnellement 10.1) qui ont été préalablement enregistrées auprès du serveur de gestion principal 13. En effet, on considère que les entités 10.2 et 10.3 ont fait l'objet d'un enregistrement, par exemple lors de leur première connexion au point d'accès 11 de l'utilisateur, auprès du serveur de gestion principal 13, qui est apte à gérer l'ensemble des entités électroniques d'un utilisateur.

A titre d'exemple, lors de l'enregistrement du thermomètre 10.3, un identifiant du thermomètre 10.3, est transmis au serveur de gestion principal 13, en association avec le premier identifiant de l'utilisateur, et optionnellement avec un type auquel il correspond (dans ce cas le type « gestion de l'énergie » par exemple). Le serveur de gestion principal 13 stocke alors l'identifiant du thermomètre 10.3 en association avec le premier identifiant d'utilisateur et avec le type « gestion de l'énergie ». Dans le cas où le type du thermomètre 10.3 n'a pas été indiqué lors de l'enregistrement du thermomètre 10.3 auprès du serveur de gestion 13 principal, l'utilisateur peut accéder au serveur de gestion principal 13 via son terminal 16 (via une application dédiée au serveur de gestion principal 13 par exemple) afin de renseigner (ou d'attribuer en choisissant parmi une liste prédéterminée) un type au thermomètre 10.3.

Il en va de même pour l'enregistrement du réfrigérateur 10.2, dont l'identifiant est stocké en association avec le premier identifiant de l'utilisateur, ainsi qu'avec le type « cuisine ».

Une fois enregistrées sur le serveur de gestion principal 13, les entités électroniques 10.2 et 10.3 peuvent transmettre des données d'événement au serveur de gestion principal 13 qui les publie sur un fil d'actualités global, accessible par l'utilisateur via son terminal 16. Un tel fil d'actualités global peut correspondre au fil d'actualité de l'art antérieur décrit en partie introductive.

L'enregistrement du robot de cuisine 10.1 sur le serveur de gestion principal 13, est optionnel, comme décrit dans ce qui suit.

A une étape 22, sur réception de la requête utilisateur, le serveur de gestion secondaire 14 vérifie que l'utilisateur identifié est au moins associé à une première entité électronique qui a été préalablement enregistrée dans le serveur de gestion secondaire 14. On appelle « première » entité électronique une entité électronique associée au premier type (au type « cuisine » dans l'exemple considéré) et ayant un lien avec le serveur de gestion secondaire (par exemple, l'entreprise gérant le serveur de gestion secondaire fabrique également la première entité électronique).

Si tel n'est pas le cas (vérification négative à l'étape 22), le serveur de gestion secondaire 14 peut refuser la requête utilisateur à une étape 25. Une telle vérification permet d'assurer que le service consistant à proposer un fil d'actualités constitué de données d'événement issues d'entités d'un premier type donné, est offert à un utilisateur ayant préalablement acquis une entité électronique associée au serveur de gestion secondaire (qui peut être un serveur d'un fabricant d'une telle entité électronique, dans ce cas le fabricant du robot de cuisine 10.1).

Si tel est le cas (vérification positive à l'étape 22), au contraire, le robot de cuisine 10.1 a été enregistré auprès du serveur de gestion secondaire 14, à une étape 23 préalable à l'étape 22, par exemple lors du premier accès du robot de cuisine 10.1 au serveur de gestion secondaire 14 via le point d'accès 11. Lors de l'enregistrement, le serveur de gestion secondaire 14 stocke un identifiant du robot de cuisine 10.1 en association avec le premier identifiant de l'utilisateur et le type « cuisine ».

Le robot de cuisine 10.1, une fois enregistré, peut transmettre des données d'événement (telles que la nécessité d'ajouter un ingrédient, une heure de fin de cuisson, etc) au serveur de gestion secondaire 14 qui peut publier, à une étape 24, ces données d'événement sur un fil d'actualités accessible à l'utilisateur via l'application installée à l'étape 20. En variante, ou de manière complémentaire, à l'étape 24, les données d'événement issues du robot de cuisine 10.1 peuvent être transmises du serveur de gestion secondaire 14 au serveur de gestion principal 13 afin qu'il publie les données d'événement du robot de cuisine sur le fil d'actualités global, avec les données d'événement du réfrigérateur 10.2 et du thermomètre 10.3.

S'il est vérifié à l'étape 22 qu'au moins une première entité électronique de l'utilisateur a été enregistrée auprès du serveur de gestion secondaire 24, alors une requête indiquant l'information relative à un premier type d'entité électronique et comprenant le premier identifiant d'utilisateur est transmise du serveur de gestion secondaire 14 au serveur de gestion principal 13, à une étape 26.

Sur réception de la requête, le serveur de gestion principal 13 détermine, à une étape 27, un premier ensemble d'entités électroniques comprenant les entités électroniques associées au premier type identifié dans la requête et associés au premier identifiant utilisateur. Plusieurs modes de réalisation sont prévus pour déduire le premier type à partir de l'information relative au premier type.

Dans le cas où l'information relative au premier type est un identifiant du premier type, la déduction est immédiate.

En variante, l'information relative au premier type peut être un identifiant de la première entité électronique (du robot de cuisine 10.1), et le serveur de gestion principal 13 peut stocker une table de correspondance mettant en correspondance des identifiants d'entités électronique avec des types d'entités électroniques. Une telle table de correspondance peut être prédéfinie ou peut être renseignée manuellement par l'utilisateur à partir de son terminal 16 accédant au serveur de gestion principal 13.

La détermination de l'étape 27 peut être mise en oeuvre par consultation d'une base de données ou mémoire stockant les associations entre les identifiants des entités électroniques enregistrées auprès du serveur de gestion principal 13, les types et les identifiants d'utilisateurs. Les identifiants des entités électroniques du premier ensemble peuvent ainsi être extraits. Dans l'exemple illustré sur la figure 1, les entités électroniques du premier ensemble (associées au premier type «cuisine ») sont le réfrigérateur 10.2, et le robot de cuisine 10.1 dans le cas où le robot de cuisine 10.1 a été enregistré auprès du serveur de gestion principal.

A une étape 28, le serveur de gestion principal 13 transmet au serveur de gestion secondaire 14 les données d'événement issues des entités électroniques du premier ensemble (au minimum les données d'événement issues du réfrigérateur 10.2).

Ainsi, le serveur de gestion secondaire 14 publie, à une étape 29, des données d'événement qui sont toutes issues d'entités électroniques du premier type « cuisine », comme requis par l'utilisateur, ce qui évite à ce dernier de consulter un fil d'actualités global tel que celui publié par le serveur de gestion principal 13, et de faire le tri entre les données d'événement issues d'entités de différents types. Les données d'événement publiées par le serveur de gestion secondaire 14 sur le fil d'actualités de l'utilisateur peuvent être :
- l'ensemble des données d'événement (des entités électroniques du premier ensemble) reçues du serveur de gestion principal 13, suite à la transmission de la requête ; ou
- l'ensemble des données d'événement (des entités électroniques du premier ensemble) reçues du serveur de gestion principal 13, suite à la transmission de la requête ainsi que les données d'événement de la ou des premières entités électroniques enregistrées auprès du serveur de gestion secondaire en association avec le premier type (le robot de cuisine 10.1).

Les données d'événement publiées sur le fil d'actualités par le serveur de gestion secondaire 14 peuvent être mises à jour de l'une des manières suivantes :
- sur réception d'une nouvelle donnée d'événement d'une entité du premier ensemble, le serveur de gestion principal 13 transmet la donnée d'événement au serveur de gestion secondaire 14 qui la publie sur le fil d'actualité de l'utilisateur ;
- le serveur de gestion principal 13 transmet, à intervalles réguliers, l'ensemble des nouvelles données d'événement issues d'entités électroniques du premier ensemble et reçus dans l'intervalle courant, au serveur de gestion secondaire 14 qui publie les nouvelles données d'événement sur le fil d'actualité de l'utilisateur ;
- le serveur de gestion secondaire 14 transmet une nouvelle requête (suite à la réception préalable d'une requête utilisateur issue de l'application installée sur le terminal 16 par exemple) afin d'obtenir les données d'événement des entités électroniques du premier ensemble reçues par le serveur de gestion principal 13 (dans l'intervalle entre la réception de la requête de l'étape 26 et celle de la nouvelle requête), et, en réponse à cette nouvelle requête, le serveur de gestion principal 13 envoie les données d'événement requises.

Les modes de réalisation décrits en référence à la figure 2 sont donnés à titre illustratif. En effet, les étapes 20 à 25 décrites ci-avant sont optionnelles. Par exemple, le procédé selon l'invention peut débuter à l'étape 26, à l'initiative du serveur de gestion secondaire 14, qui peut requérir les données d'événement du premier ensemble pour certains ou l'ensemble des utilisateurs qui ont une première entité électronique enregistrée sur le serveur de gestion secondaire 14. Les données d'événement retournées par le serveur de gestion principal 13 peuvent ensuite être stockées, et le fil d'actualités peut ainsi être généré à partir de données locales sur réception d'une requête utilisateur.

En outre, selon un mode de réalisation alternatif, les étapes 20 et 21 ne sont pas mises en oeuvre, et, sur enregistrement d'une première entité électronique (telle que le robot de cuisine 10.1) auprès du serveur de gestion secondaire 12 (étape 23), la première entité électronique étant associée au premier type, le serveur de gestion secondaire 12 envoie la requête de l'étape 26. L'élément déclencheur de la transmission de la requête de l'étape 26 peut ainsi être l'enregistrement d'une première entité électronique de l'utilisateur auprès du serveur de gestion secondaire 14 (et non plus l'envoi d'une requête par l'utilisateur via l'application installée sur le terminal).

Les données d'événements issues des entités électroniques du premier ensemble peuvent ainsi être stockées au niveau du serveur de gestion secondaire 14, qui peut ainsi les retourner à l'utilisateur, sur requête de l'utilisateur ou de manière spontanée, sans avoir à consulter à nouveau le serveur de gestion principal 13.

De plus, dans le cas d'un enregistrement d'une deuxième entité électronique (un thermostat du premier utilisateur par exemple) associée à un deuxième type (le type « gestion de l'énergie » par exemple) auprès du serveur de gestion secondaire 14 (ou d'un autre serveur de gestion secondaire d'un fabricant du thermostat par exemple), une deuxième requête est générée par le serveur de gestion secondaire afin de requérir auprès du serveur de gestion principal 13 des données d'événements issues d'un deuxième ensemble d'entités électroniques associées au deuxième type. La deuxième requête comprend à cet effet une information relative au deuxième type ainsi que le premier identifiant d'utilisateur.

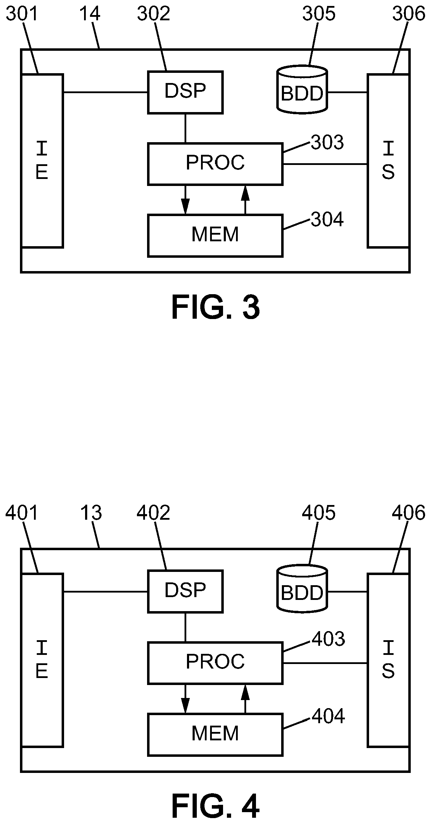

La **figure 3** représente un serveur de gestion secondaire 14 selon un mode de réalisation de l'invention.

Le serveur de gestion secondaire 14 comprend une mémoire vive 304 et un processeur 303 pour stocker des instructions permettant la mise en oeuvre des étapes du procédé décrites ci-avant qui sont propres au serveur de gestion secondaire 14. En particulier, le processeur 303 est configuré pour :
- gérer l'enregistrement de premières entités électroniques (robot de cuisine 10.1 dans l'exemple exposé ci-dessus) auprès du serveur de gestion secondaire 14;
- traiter la requête utilisateur reçue depuis l'application du terminal 16 ;
- extraire les informations de la requête utilisateur ;
- générer une requête à destination du serveur de gestion principal 13 ;
- vérifier qu'au moins une première entité électronique associée à l'utilisateur identifié dans une requête utilisateur, est enregistrée sur le serveur de gestion secondaire avant de générer la requête à destination du serveur de gestion principal 13 ;
- traiter les données d'événement reçues depuis le serveur de gestion principal 13 ;
- générer le fil d'actualités d'un utilisateur à partir de données d'événement issues d'entités électroniques d'un premier type.

Le serveur de gestion secondaire 14 comporte aussi une base de données 305 pour le stockage de données destinées à être conservées avant, pendant ou après l'application du procédé. La base de données 305 peut notamment stocker les premiers types spécifiques du serveur de gestion secondaire 14 (un seul premier type « cuisine » dans l'exemple détaillé ci-dessus), une table de correspondance entre des identifiants d'utilisateurs et des identifiants de premières entités électroniques du premier type enregistrées auprès du serveur de gestion secondaire 14.

Le serveur de gestion secondaire 14 comporte en outre une interface d'entrée 301, ou unité de réception, destinée à recevoir des données d'événement du serveur de gestion principal 13, des données d'événement des premières entités électroniques enregistrées auprès du serveur de gestion secondaire (le robot de cuisine 10.1), et les requêtes d'utilisateurs (ainsi que toute requête d'échange entre l'application installée sur le terminal 16 et le serveur de gestion secondaire).

Le serveur de gestion secondaire 14 comporte en outre une interface de sortie 306, ou unité de transmission, apte à transmettre la requête au serveur de gestion principal 13 et à transmettre le fil d'actualités pour un affichage sur le terminal 16 de l'utilisateur.

Le serveur de gestion secondaire 14 peut en outre comporter un processeur de signal numérique (DSP) 302.

La **figure 4** représente un serveur de gestion principal 13 selon un mode de réalisation de l'invention.

Le serveur de gestion principal 13 comprend une mémoire vive 404 et un processeur 403 pour stocker des instructions permettant la mise en oeuvre des étapes du procédé décrites ci-avant qui sont propres au serveur de gestion principal 13. En particulier, le processeur 403 est configuré pour :
- gérer l'enregistrement d'entités électroniques (le thermomètre 10.3, le réfrigérateur 10.2, et éventuellement le robot de cuisine 10.1, dans l'exemple exposé ci-dessus) ;
- gérer les données d'événement reçus des entités électroniques enregistrées et générer un fil d'actualités global à partir de ces données d'événement ;
- traiter la requête reçue depuis le serveur de gestion secondaire 14 ;
- extraire les informations de la requête, et notamment déterminer le premier type à partir duquel le premier ensemble doit être sélectionné ;
- sélectionner les entités du premier ensemble d'entités électroniques parmi les entités électroniques enregistrées, à partir du premier type identifié dans la requête ;
- grouper les données d'événement des entités électroniques du premier ensemble.

Le serveur de gestion principal 13 comporte aussi une base de données 405 pour le stockage de données destinées à être conservées avant, pendant ou après l'application du procédé. La base de données 405 peut notamment stocker les associations entre des identifiants utilisateurs, des identifiants d'entités électroniques enregistrées, et des types d'entités électroniques. La base de données 405 peut en outre stocker les identifiants des entités électroniques enregistrées en association avec des données d'événement reçues par elles (éventuellement accompagnées d'une estampille temporelle).

Le serveur de gestion principal 13 peut en outre comprendre une interface d'entrée 401, ou unité de réception, destinée à recevoir des données d'événement des entités électroniques enregistrées, et les requêtes du serveur de gestion secondaire 14, ainsi que toute requête d'échange entre une application dédiée du terminal 16 et le serveur de gestion principal 13 (par exemple une requête d'affichage du fil d'actualités global d'un utilisateur donné).

Le serveur de gestion principal 13 peut en outre comprendre une interface de sortie 406, ou unité de transmission, apte à transmettre les données d'événement des entités électroniques du premier ensemble au serveur de gestion secondaire 14.

Le serveur de gestion principal 13 peut en outre comporter un processeur de signal numérique (DSP) 302.

La présente invention ne se limite pas aux formes de réalisation décrites ci-avant à titre d'exemples ; elle s'étend à d'autres variantes.

De plus, les exemples donnés impliquent trois entités connectées et un unique point d'accès. Une telle architecture est donnée à titre illustratif uniquement et ne saurait restreindre l'invention à ces seuls exemples.

## Revendications

1. Procédé de gestion d'une pluralité d'entités électroniques (10.1 ; 10.2 ; 10.3), chaque entité électronique enregistrée auprès d'un serveur de gestion principal (13) étant :
- associée à un type donné et à un identifiant d'utilisateur dans le serveur de gestion principal, et
- apte à transmettre des données d'événement au serveur de gestion principal,
le procédé comprenant les étapes suivantes :
- transmission (26), par un serveur de gestion secondaire (14) au serveur de gestion principal, d'une requête indiquant une information relative à un premier type d'entité électronique et comprenant un premier identifiant d'utilisateur ;
- détermination (27) par le serveur de gestion principal d'un premier ensemble (10.1 ;10.2) d'entités électroniques comprenant les entités électroniques associées au premier type identifié dans la requête et associés au premier identifiant d'utilisateur;
- transmission (28), par le serveur de gestion principal, des données d'événement issues des entités électroniques du premier ensemble, au serveur de gestion secondaire ;
- publication (29), par le serveur de gestion secondaire, des données d'événement issues desdites entités électroniques du premier ensemble sur un fil d'actualités d'un utilisateur associé au premier identifiant d'utilisateur.

2. Procédé selon la revendication 1, comprenant en outre une étape d'enregistrement d'une première entité électronique (10.1) auprès du serveur de gestion secondaire (14), ladite première entité électronique étant associée au premier type et au premier identifiant d'utilisateur, et ladite première entité électronique étant apte à transmettre des données d'événement au serveur de gestion secondaire.

3. Procédé selon la revendication 1 ou 2, comprenant une étape préalable d'installation (20) d'une application sur un terminal (16) d'un utilisateur associé au premier identifiant d'utilisateur, ladite application permettant l'accès au serveur de gestion secondaire (14), la requête étant transmise par le serveur de gestion secondaire sur réception d'une requête utilisateur issue de l'application installée sur le terminal utilisateur.

4. Procédé selon la revendication 2, dans lequel la requête est transmise par le serveur de gestion secondaire (14) suite à l'étape d'enregistrement de la première entité électronique (10.1) auprès du serveur de gestion secondaire.

5. Procédé selon la revendication 2 à 4, dans lequel les données d'événement issues de la première entité électronique (10.1) sont publiées sur le fil d'actualités de l'utilisateur avec les données d'événement issues des entités électroniques du premier ensemble (10.1 ; 10.2).

6. Procédé selon l'une des revendications 2 à 5, comprenant en outre les étapes suivantes :
- transmission par le serveur de gestion secondaire (14) au serveur de gestion principal (13) des données d'événement issues de la première entité électronique (10.1) ;
- publication par le serveur de gestion principal desdites données d'événement sur un fil d'actualités global de l'utilisateur associé au premier identifiant d'utilisateur.

7. Procédé selon les revendications 2 et 3, dans lequel l'envoi de la requête au serveur de gestion principal (13) est conditionné par l'enregistrement préalable de la première entité électronique (10.1) auprès du serveur de gestion secondaire (14).

8. Procédé selon l'une des revendications 2 à 7, dans lequel l'information relative au premier type de dispositif est un identifiant de la première entité électronique (10.1), et dans lequel l'identifiant de la première entité électronique a été préalablement enregistré dans le serveur de gestion principal (13) en association avec un identifiant du premier type.

9. Procédé selon l'une des revendications 1 à 7, dans lequel l'information relative au premier type de dispositif est un identifiant du premier type.

10. Programme informatique comportant des instructions pour la mise en oeuvre du procédé selon l'une quelconque des revendications précédentes, lorsque ces instructions sont exécutées par un processeur.

11. Serveur de gestion secondaire d'un fil d'actualités d'un utilisateur, ledit serveur de gestion secondaire (14) comprenant :
- une unité de transmission (306) pour transmettre, à un serveur de gestion principal (14), d'une requête indiquant une information relative à un premier type d'entité électronique et comprenant un premier identifiant d'utilisateur ;
- une unité de réception (301) pour recevoir, depuis le serveur de gestion principal, de données d'événement issues d'entités électroniques d'un premier ensemble, ledit premier ensemble (10.1 ; 10.2) comprenant des entités électroniques associées au premier type identifié dans la requête et associés au premier identifiant d'utilisateur ;
- un processeur (303) apte à publier les données d'événement issues desdites entités électroniques du premier ensemble sur un fil d'actualités d'un utilisateur associé au premier identifiant d'utilisateur.

12. Serveur de gestion principal d'une pluralité d'entités électroniques (10.1 ; 10.2 ; 10.3), le serveur de gestion principal (13) comprenant :
- une mémoire (405) stockant en association chaque entité électronique avec un type donné et un identifiant d'utilisateur ;
- une unité de réception (401) apte à :
- recevoir des données d'événement desdites entités électroniques;
- recevoir depuis un serveur de gestion secondaire (14), une requête indiquant une information relative à un premier type d'entité électronique et comprenant un premier identifiant d'utilisateur ;
- un processeur (403) apte à déterminer un premier ensemble d'entités électroniques comprenant les entités électroniques associées au premier type identifié dans la requête et associés au premier identifiant d'utilisateur ;
- une unité de transmission (406) des données d'événement issues des entités électroniques du premier ensemble, au serveur de gestion secondaire.

13. Système de gestion d'une pluralité d'entités électroniques comprenant un serveur de gestion principal (13) selon la revendication 12 et un serveur de gestion secondaire (14) selon la revendication 11.

## Patentansprüche

1. Verfahren zur Verwaltung mehrerer elektronischer Entitäten (10.1; 10.2; 10.3), wobei jede bei einem Hauptverwaltungsserver (13) angemeldete elektronische Entität:
- einem gegebenen Typ und einer Benutzerkennung in dem Hauptverwaltungsserver zugeordnet ist, und
- in der Lage ist, Ereignisdaten zu dem Hauptverwaltungsserver zu übertragen,
wobei das Verfahren die folgenden Schritte umfasst:
- Übertragung (26), durch einen sekundären Verwaltungsserver (14) zum Hauptverwaltungsserver, einer Anforderung, die eine Information in Bezug auf einen ersten Typ von elektronischer Entität angibt und eine erste Benutzerkennung umfasst;
- Bestimmung (27), durch den Hauptverwaltungsserver, einer ersten Menge (10.1; 10.2) von elektronischen Entitäten, welche die elektronischen Entitäten umfasst, die dem in der Anforderung identifizierten ersten Typ zugeordnet sind und der ersten Benutzerkennung zugeordnet sind;
- Übertragung (28), durch den Hauptverwaltungsserver, der von den elektronischen Entitäten der ersten Menge ausgegebenen Ereignisdaten zu dem sekundären Verwaltungsserver;
- Veröffentlichung (29), durch den sekundären Verwaltungsserver, der von den elektronischen Entitäten der ersten Menge ausgegebenen Ereignisdaten auf einem Newsfeed eines Benutzers, welcher der ersten Benutzerkennung zugeordnet ist.

2. Verfahren nach Anspruch 1, welches außerdem einen Schritt der Anmeldung einer ersten elektronischen Entität (10.1) bei dem sekundären Verwaltungsserver (14) umfasst, wobei die erste elektronische Entität dem ersten Typ und der ersten Benutzerkennung zugeordnet ist und wobei die erste elektronische Entität in der Lage ist, Ereignisdaten zu dem sekundären Verwaltungsserver zu übertragen.

3. Verfahren nach Anspruch 1 oder 2, welches einen vorausgehenden Schritt der Installation (20) einer Anwendung auf einem Endgerät (16) eines Benutzers, welcher der ersten Benutzerkennung zugeordnet ist, umfasst, wobei die Anwendung den Zugang zu dem sekundären Verwaltungsserver (14) ermöglicht, wobei die Anforderung von dem sekundären Verwaltungsserver bei Empfang einer Benutzeranforderung übertragen wird, die von der auf dem Benutzerendgerät installierten Anwendung ausgegeben wurde.

4. Verfahren nach Anspruch 2, wobei die Anforderung von dem sekundären Verwaltungsserver (14) im Anschluss an den Schritt der Anmeldung der ersten elektronischen Entität (10.1) bei dem sekundären Verwaltungsserver übertragen wird.

5. Verfahren nach Anspruch 2 bis 4, wobei die von der ersten elektronischen Entität (10.1) ausgegebenen Ereignisdaten auf dem Newsfeed des Benutzers mit den von den elektronischen Entitäten der ersten Menge (10.1; 10.2) ausgegebenen Ereignisdaten veröffentlicht werden.

6. Verfahren nach einem der Ansprüche 2 bis 5, welches außerdem die folgenden Schritte umfasst:
- Übertragung, durch den sekundären Verwaltungsserver (14) zum Hauptverwaltungsserver (13), der von der ersten elektronischen Entität (10.1) ausgegebenen Ereignisdaten;
- Veröffentlichung dieser Ereignisdaten durch den Hauptverwaltungsserver auf einem globalen Newsfeed des Benutzers, welcher der ersten Benutzerkennung zugeordnet ist.

7. Verfahren nach den Ansprüchen 2 und 3, wobei das Senden der Anforderung an den Hauptverwaltungsserver (13) die vorausgehende Anmeldung der ersten elektronischen Entität (10.1) bei dem sekundären Verwaltungsserver (14) voraussetzt.

8. Verfahren nach einem der Ansprüche 2 bis 7, wobei die Information in Bezug auf den ersten Typ von Vorrichtung eine Kennung der ersten elektronischen Entität (10.1) ist und wobei die Kennung der ersten elektronischen Entität zuvor in dem Hauptverwaltungsserver (13) in Verbindung mit einer Kennung des ersten Typs angemeldet worden ist.

9. Verfahren nach einem der Ansprüche 1 bis 7, wobei die Information in Bezug auf den ersten Typ von Vorrichtung eine Kennung des ersten Typs ist.

10. Computerprogramm, welches Anweisungen zur Durchführung des Verfahrens nach einem der vorhergehenden Ansprüche, wenn diese Anweisungen von einem Prozessor ausgeführt werden, umfasst.

11. Sekundärer Verwaltungsserver eines Newsfeeds eines Benutzers, wobei der sekundäre Verwaltungsserver (14) umfasst:
- eine Übertragungseinheit (306) zum Übertragen, zu einem Hauptverwaltungsserver (14), einer Anforderung, die eine Information in Bezug auf einen ersten Typ von elektronischer Entität angibt und eine erste Benutzerkennung umfasst;
- eine Empfangseinheit (301) zum Empfangen, von dem Hauptverwaltungsserver, von Ereignisdaten, die von elektronischen Entitäten einer ersten Menge ausgegeben wurden, wobei die erste Menge (10.1; 10.2) elektronische Entitäten umfasst, die dem in der Anforderung identifizierten ersten Typ zugeordnet sind und der ersten Benutzerkennung zugeordnet sind;
- einen Prozessor (303), der in der Lage ist, die von den elektronischen Entitäten der ersten Menge ausgegebenen Ereignisdaten auf einem Newsfeed eines Benutzers zu veröffentlichen, welcher der ersten Benutzerkennung zugeordnet ist.

12. Hauptverwaltungsserver mehrerer elektronischer Entitäten (10.1; 10.2; 10.3), wobei der Hauptverwaltungsserver (13) umfasst:
- einen Speicher (405), in dem jede elektronische Entität zusammen mit einem gegebenen Typ und einer Benutzerkennung, die ihr zugeordnet sind, gespeichert ist;
- eine Empfangseinheit (401), die in der Lage ist:
- Ereignisdaten von den elektronischen Entitäten zu empfangen;
- von einem sekundären Verwaltungsserver (14) eine Anforderung zu empfangen, die eine Information in Bezug auf einen ersten Typ von elektronischer Entität angibt und eine erste Benutzerkennung umfasst;
- einen Prozessor (403), der in der Lage ist, eine erste Menge von elektronischen Entitäten zu bestimmen, welche die elektronischen Entitäten umfasst, die dem in der Anforderung identifizierten ersten Typ zugeordnet sind und der ersten Benutzerkennung zugeordnet sind;
- eine Einheit zur Übertragung (406) der von den elektronischen Entitäten der ersten Menge ausgegebenen Ereignisdaten zu dem sekundären Verwaltungsserver.

13. System zur Verwaltung mehrerer elektronischer Entitäten, welches einen Hauptverwaltungsserver (13) nach Anspruch 12 und einen sekundären Verwaltungsserver (14) nach Anspruch 11 umfasst.

## Claims

1. Method for managing a plurality of electronic entities (10.1; 10.2; 10.3), each electronic entity registered with a primary management server (13) being:
- associated with a given type and with a user identifier in the primary management server, and
- able to transmit event data to the primary management server,
the method comprising the following steps:
- transmission (26), by a secondary management server (14) to the primary management server, of a request indicating an item of information relating to a first type of electronic entity and comprising a first user identifier;
- determination (27), by the primary management server, of a first set (10.1; 10.2) of electronic entities comprising the electronic entities associated with the first type identified in the request and associated with the first user identifier;
- transmission (28), by the primary management server, of the event data originating from the electronic entities of the first set to the secondary management server;
- publication (29), by the secondary management server, of the event data originating from said electronic entities of the first set on a newsfeed of a user associated with the first user identifier.

2. Method according to Claim 1, furthermore comprising a step of registering a first electronic entity (10.1) with the secondary management server (14), said first electronic entity being associated with the first type and with the first user identifier, and said first electronic entity being able to transmit event data to the secondary management server.

3. Method according to Claim 1 or 2, comprising a preliminary step of installing (20) an application on a terminal (16) of a user associated with the first user identifier, said application allowing access to the secondary management server (14), the request being transmitted by the secondary management server upon reception of a user request originating from the application installed on the user terminal.

4. Method according to Claim 2, wherein the request is transmitted by the secondary management server (14) following the step of registering the first electronic entity (10.1) with the secondary management server.

5. Method according to Claims 2 to 4, wherein the event data originating from the first electronic entity (10.1) are published on the newsfeed of the user with the event data originating from the electronic entities of the first set (10.1; 10.2).

6. Method according to one of Claims 2 to 5, furthermore comprising the following steps:
- transmission, by the secondary management server (14) to the primary management server (13), of the event data originating from the first electronic entity (10.1);
- publication, by the primary management server, of said event data on an overall newsfeed of the user associated with the first user identifier.

7. Method according to Claims 2 and 3, wherein the sending of the request to the primary management server (13) is conditional upon the prior registration of the first electronic entity (10.1) with the secondary management server (14).

8. Method according to one of Claims 2 to 7, wherein the item of information relating to the first type of device is an identifier of the first electronic entity (10.1), and wherein the identifier of the first electronic entity has been registered beforehand in the primary management server (13) in association with an identifier of the first type.

9. Method according to one of Claims 1 to 7, wherein the item of information relating to the first type of device is an identifier of the first type.

10. Computer program including instructions for implementing the method according to any one of the preceding claims when these instructions are executed by a processor.

11. Secondary management server for managing a newsfeed of a user, said secondary management server (14) comprising:
- a transmission unit (306) for transmitting, to a primary management server (14), a request indicating an item of information relating to a first type of electronic entity and comprising a first user identifier;
- a reception unit (301) for receiving, from the primary management server, event data originating from electronic entities of a first set, said first set (10.1; 10.2) comprising electronic entities associated with the first type identified in the request and associated with the first user identifier;
- a processor (303) able to publish the event data originating from said electronic entities of the first set on a newsfeed of a user associated with the first user identifier.

12. Primary management server for managing a plurality of electronic entities (10.1; 10.2; 10.3), the primary management server (13) comprising:
- a memory (405) storing, in association, each electronic entity with a given type and a user identifier;
- a reception unit (401) able to:
- receive event data from said electronic entities;
- receive, from a secondary management server (14), a request indicating an item of information relating to a first type of electronic entity and comprising a first user identifier;
- a processor (403) able to determine a first set of electronic entities comprising the electronic entities associated with the first type identified in the request and associated with the first user identifier;
- a transmission unit (406) for transmitting the event data originating from the electronic entities of the first set to the secondary management server.

13. System for managing a plurality of electronic entities, comprising a primary management server (13) according to Claim 12 and a secondary management server (14) according to Claim 11.
